# EUROPÄISCHE PATENTSCHRIFT

(11) **EP 2 245 970 B1**
(45) Veröffentlichungstag und Bekanntmachung des Hinweises auf die Patenterteilung: **06.07.2011**
(21) Anmeldenummer: 10003777.9
(22) Anmeldetag: 08.04.2010
(51) Int. Cl.: A47J 31/44

(54) **Getränkebereitungsmaschine, insbesondere Espressomaschine, mit einer höhenverstellbaren Getränkeauslaufeinheit**
Beverage making machine, in particular espresso machine, with a height-adjustable drink outlet unit
Machine de préparation de boissons, notamment machine espresso, dotée d'une unité de distribution de boissons réglable en hauteur

(30) Priorität: 28.04.2009 DE 202009006129 U
(43) Veröffentlichungstag der Anmeldung: 03.11.2010
(73) Patentinhaber: Eugster/Frismag AG, 8580 Amriswil (CH)
(72) Erfinder: Brändle, Walter, 8592 Uttwil TG (CH); Forrer, Fritz, 9100 Herisau AR (CH); Birke, Lars, 8274 Tägerwilen (CH)
(74) Vertreter: Schubert, Siegmar

(56) Entgegenhaltungen:
- DE-U1- 20 017 859
- DE-U1- 20 220 056
- DE-U1-202005 011 476

## Beschreibung

Die Erfindung betrifft eine Getränkebereitungsmaschine, insbesondere Espressomaschine, mit einer höhenverstellbaren Getränkeauslaufeinheit gemäß dem Oberbegriff des Anspruchs 1.

Derartige Getränkebereitungsmaschinen, insbesondere Espressomaschinen, weisen eine Getränkeauslaufeinheit auf, in der wenigstens ein nach unten offenes Auslaufrohr angeordnet ist, unter dem ein Aufnahmegefäß, beispielsweise eine Tasse oder ein Glas, aufgestellt werden kann, welches das in der Getränkebereitungsmaschine, insbesondere Espressomaschine, bereitete Getränk bzw. Kaffee aufnimmt. Die Getränkeauslaufeinheit ist höhenverstellbar, damit Tassen oder Gläser unterschiedlicher Höhe verwendet werden können, an deren oben offene Seite das Auflaufrohr herangeführt werden kann. Die Getränkeauslaufeinheit, die typisch einen Getränkeauslaufverteiler umfasst, ist an einer Vorderseite einer Maschinengehäusefrontwand angeordnet, während die eigentliche Getränkebereitungseinrichtung, insbesondere eine Brühkammer einer Espressomaschine, sich in dem Inneren des Maschinengehäuses befindet. Eine Getränkezulaufleitung, über welche das Getränk aus dem Inneren des Maschinengehäuses von der Getränkebereitungseinrichtung bzw. der Brühkammer der Getränkeauslaufeinheit zugeführt wird, verläuft durch einen Durchbruch der Maschinengehäusefrontwand, der sich in Höhenverstellrich. tung der Getränkeauslaufeinheit erstreckt. Wenn sich die Mittel zur höhenverstellbaren Lagerung der Getränkeauslaufeinheit ebenfalls innerhalb des Maschinengehäuses befinden, was bevorzugt ist, erstreckt sich auch ein Verbindungsglied von der Getränkezulaufleitung in den Durchbruch der Maschinengehäusefrontwand. Die Mittel zur Lagerung der Getränkeauslaufeinheit können in einem mit dieser über das Verbindungsglied verbundenen Schlitten, der auf einer vertikalen Gleitschiene verschiebbar geführt ist, bestehen. Zu diesem aus der Praxis bekannten Stand der Technik gehört auch, dass die Gleitschiene mit dem Schlitten und gegebenenfalls eine Getränkezulaufeinrichtung, die einerseits mit der eigentlichen Getränkebereitungseinrichtung, insbesondere der Brühkammer, und andererseits mit der Getränkeauslaufeinheit bzw. dem Verbindungsglied verbunden ist, in einem Trägerchassis angeordnet ist, welches eine separate Baugruppe bildet, die in dem Maschinengehäuse vorzugsweise an der Maschinengehäusefrontwand montiert ist.

Bei derartigen Getränkebereitungsmaschinen, insbesondere Espressomaschinen kann stören, dass der in Verstellrichtung der Getränkeauslaufeinheit verlaufende Durchbruch in der Maschinengehäusefrontwand durch die Getränkeauslaufeinheit nicht vollständig abgedeckt wird, insbesondere wenn diese kompakt ist und der Höhenverstellweg groß ist. Durch die offenen Abschnitte des Durchbruchs können in das Innere der Getränkebereitungsmaschine Schmutzpartikel, insbesondere Kaffeereste, gelangen.

Um dies zu vermeiden, könnte daran gedacht werden, die Getränkeauslaufeinheit, die auch als Auslaufschieber bezeichnet wird, mit einem Blendenteil außen vor der Maschinengehäusefrontwand auszustatten, das aber den nutzbaren Höhenverstellweg beschränken könnte. Um die Lagerung eines solchen Auslaufschiebers zu verbessern, ist es bekannt, diesen zweiteilig auszubilden, nämlich mit einem Blendenteil und einem Auslaufverteiler, wobei der Auslaufverteiler aus dem Blendenteil teleskopartig ausziehbar und höhenverstellbar gelagert ist. Dies soll eine kompaktere Bauweise bei größerem Verstellbereich erlauben, bedingt aber eine technisch aufwendigere Konstruktion (DE 202 20 058 U1).

Bei einem anderen bekannten Kaffeeautomaten ist eine Auslaufeinheit an einem Träger gelagert, der außen an der Maschinengehäusefrontwand montiert ist (DE 20 2005 011 476 U1). Durch einen Durchbruch der Maschinengehäusefrontwand reicht eine Kaffeezulaufleitung aus dem Inneren des Kaffeeautomaten in eine Auslaufeinheit, in der sie an einem Kaffeeauslaufverteiler angebracht ist, welcher in Kaffeeauslaufrohre mündet. Die Lagerung der Auslauf einheit erfolgt mittels eines Längskugellagers als erstes Lagerelement, welches eine vertikale Längskugellagerachse als zweites Lagerelement umgreift, die an dem Träger angebracht ist. Bei diesem Kaffeeautomaten ist zwar weitgehend vermieden, dass Schmutzpartikel durch den Durchbruch der Maschinengehäusefrontwand in das Maschinengehäuse gelangen, jedoch ist die relative Höhenverstellbarkeit der Auslaufeinheit kleiner als deren Höhenabmessung.

Der vorliegenden Erfindung liegt die Aufgabe zugrunde, eine Getränkebereitungsmaschine mit einer kompakten, über einen großen Verstellweg höhenverstellbaren Getränkeauslaufeinheit ohne externes Blendenteil so auszubilden, dass in keiner Höheneinstellung unabgedeckte Bereiche des Durchbruches der Maschinengehäusefrontwand offen sind, um einen Durchlass für Schmutzpartikel, insbesondere Kaffeereste, in das Innere der Espressomaschine zu verMeiden.

Diese Aufgabe wird durch eine Getränkebereitungsmaschine mit den in Anspruch 1 angegebenen Merkmalen gelöst.

Mit der erfindungsgemäßen Getränkebereitungsmaschine wird erreicht, dass Bereiche des Durchbruchs der Maschinengehäusefrontwand, die auf deren Außenseite nicht durch die Getränkeauslaufeinheit abgedeckt sind, auf der Innenseite der Gehäusefrontwand mit mindestens einem Abdeckband abgedeckt werden, ohne die Höhenverstellbarkeit der Auslaufeinheit zu begrenzen.

Dadurch, dass das Abdeckband hinter dem Durchbruch in dem Maschinengehäuse mit der Getränkeauslaufeinheit in Verbindung steht, wird das Abdeckband abhängig von der Höheneinstellung der Getränkeauslaufeinheit mit verstellt, so dass es bei jeder Höheneinstellung mindestens einen von der Getränkeauslaufeinheit außen nicht abgedeckten Abschnitt des Durchbruchs an der Innenseite der Maschinengehäusefrontwand abdeckt, wodurch die Abdeckung des Durchbruchs von außen gesehen vollständig ist. Um die Höhenverstellbarkeit der Getränkeauslaufeinheit nicht zu behindern, ist insbesondere vorgesehen, dass jeweils mindestens ein Umlenkabschnitt des mindestens einen Abdeckbands von der Innenseite der Maschinengehäusefrontwand weg zu dem Inneren des Maschinengehäuses umgelenkt ist.

Die Anordnung des mindestens einen Abdeckbands an der Getränkeauslaufeinheit und die Umlenkung des Abdeckbands können, wie weiter unten angegeben, in zwei Varianten erfolgen. In jeder Variante wird erreicht, dass an dem Durchbruch ein Abschnitt, der durch die höhenverstellbare Getränkeauslaufeinheit außen abgedeckt ist, innen in dem Maschinengehäuse frei bleibt, um durch diesen die Getränkezulaufleitung ungehindert der Getränkeauslaufeinheit zuzuführen bzw. um gegebenenfalls eine Zugänglichkeit des Verbindungsglieds, welches sich von der Getränkeauslaufeinheit bis zumindest in den Durchbruch erstreckt, zu dem Inneren des Maschinengehäuses zu erhalten.

Wenn das Verbindungsglied, welches sich von der Getränkeauslaufeinheit bis zumindest in den Durchbruch der Maschinengehäusefrontwand erstreckt, gemäß Anspruch 2 in dem Maschinengehäuse mit einem vertikal verschiebbar gelagerten Schlitten verbunden ist, steht das mindestens eine Abdeckband konstruktiv zweckmäßig mit dem Schlitten in Verbindung, um die den Durchbruch in dem Maschinengehäuse abdeckenden Abdeckabschnitte entsprechend der Höheneinstellung der Getränkeauslaufeinheit zu begrenzen bzw. zu verschieben, wodurch auch der durch die Abdeckbandabschnitte nicht abgedeckte Abschnitt eingestellt wird.

In der ersten Variante der erfindungsgemäßen Getränkebereitungsmaschine nach Anspruch 3 deckt ein einziges Abdeckband je einen von der Maschinenauslaufeinheit oberhalb und unterhalb der Maschinenauslaufeinheit außen nicht abgedeckten Abschnitt des Durchbruchs der Maschinengehäusefrontwand an deren Innenseite ab, ohne den Durchtritt der Getränkezulaufleitung durch den Durchbruch zu behindern.

Hierzu ist gemäß Anspruch 4 im Einzelnen das Abdeckband so angeordnet, dass ein oberer Endabschnitt oder ein unterer Endabschnitt des Abdeckbands oberhalb bzw. unterhalb des Durchbruchs der Maschinengehäusefrontwand in Bezug auf diese ortsfest fixiert ist, d.h. unmittelbar oder mittelbar mit dieser verbunden ist, dass das Abdeckband mittels einer an dem jeweils anderen der beiden Endabschnitte angreifenden Feder gespannt ist und dass mittels Abdeckbandumlenkelementen an dem Schlitten zumindest zwei Umlenkabschnitte des Abdeckbands, die mittelbar oder unmittelbar benachbart sind bzw. aneinandergrenzen, einen Abschnitt des Durchbruchs, der außen durch die Getränkeauslaufeinheit abgedeckt ist, innen in dem Maschinengehäuse nicht abdecken und somit einen freien Durchgang der Getränkezulaufleitung und/oder des Verbindungsglieds gestatten. Das Verbindungsglied kann als ein Abschnitt der Zulaufleitung ausgebildet sein, der zu dem Getränkeauslauf in der Getränkeauslaufeinheit führt. In dem Maschinengehäuse ist das Abdeckband zwischen den Umlenkabschnitten um einen Abschnitt der Zulaufleitung herum geführt, so dass diese in ein Raumteil in dem Maschinengehäuse umgelenkt sein kann, in dem sie bei Höhenverstellung der Getränkeauslaufeinheit beweglich ist.

Bevorzugt ist die das Abdeckband spannende Feder nach Anspruch 5 mittels einer mit ihr gekoppelten Verstelleinheit einstellbar, so dass deren Vorspannung bzw. die mit der Feder auf das Abdeckband ausgeübte Zugkraft frei gewählt werden kann. Die mit der Feder gekoppelte Verstelleinheit ermöglicht es, durch Einstellung der Federvorspannung Teiletoleranzen bei der Montage zu kompensieren und unterschiedlich schwere Auslaufeinheiten nach der Montage so einzustellen, dass stets gleich große Verstellkräfte aufzubringen sind.

Weiter im Einzelnen können gemäß Anspruch 6 die mit dem Schlitten in Verbindung stehenden Abdeckbandumlenkelemente so angeordnet sein, dass zwischen den beiden Umlenkabschnitten des Abdeckbands ein Zwischenabschnitt in horizontalem Abstand zu dem Durchbruch der Maschinengehäusefrontwand umgelenkt ist. In dieser Weise kann der zu dem Durchbruch offene Raumabschnitt, der durch die Umlenkabschnitte und den Zwischenabschnitt begrenzt ist, zur Aufnahme eines Abschnitts der Getränkezulaufleitung erweitert sein. Dieser Abschnitt der Getränkezulaufleitung ist vorteilhaft an bzw. in einer Kaffeezulaufeinrichtung angeordnet, mit der die Kaffeezulaufleitung aus einer Orientierung senkrecht zu dem Durchbruch der Maschinengehäusefontwand in eine zu dieser parallele Orientierung umgelenkt wird. Wände der Kaffeezulaufeinrichtung können den zu dem Durchbruch offenen Raumabschnitt, den das Abdeckband im Umlenkbereich einschließt, seitlich begrenzen.

Weiterhin vorteilhaft ist gemäß Anspruch 7 der Schlitten auf einer vertikalen Gleitschiene präzise und leicht verstellbar geführt. Herstellungsgünstig sind die Gleitschiene mit dem Schlitten und gegebenenfalls die Getränkezulaufeinrichtung mit der Getränkezulaufleitung auf einem Trägerchassis angeordnet, welches in dem Maschinengehäuse, vorzugsweise an der Maschinengehäusefrontwand innen montiert ist. Einer der beiden Endabschnitte des Abdeckbands und die Feder an dem anderen der beiden Endabschnitte sind an dem Trägerchassis angebracht. Auf dem als Einheit in dem Maschinengehäuse montierbaren Trägerchassis sind somit die Mittel zum teilweisen Abdecken des Durchbruchs der Maschinengehäusefrontwand, der Durchführung der Getränkezulaufleitung durch die Maschinengehäusefrontwand und der Lagerung der Getränkeauslaufeinheit angeordnet. Diese Einheit kann vor dem Einsatz in dem Maschinengehäuse vorgefertigt werden und im Bedarfsfall zur Reinigung und/oder Wartung bzw. zur Reparatur ausgetauscht werden.

Die oben erwähnte Anordnung der Abdeckbandumlenkelemente an dem Schlitten kann gemäß Anspruch 8 damit definiert werden, dass die Umlenkabschnitte des Abdeckbands und gegebenenfalls dessen Zwischenabschnitt, der sich zwischen den Umlenkabschnitten befindet, den zu dem Durchbruch offenen Raumabschnitt annähernd C-förmig begrenzen.

Nach Anspruch 9 sind die vier Abdeckbandumlenkelemente in dem Fall, in dem sie das Abdeckband mit einem Zwischenabschnitt in einem horizontalen Abstand zu dem Durchbruch der Maschinengehäusefrontwand umlenken, in einer annähernd rechteckförmigen Anordnung angeordnet, wobei sich an jeder Ecke der Anordnung eines der Abdeckbandumlenkelemente befindet.

Ein solches Abdeckbandumlenkelement kann nach Anspruch 10 jeweils eine drehbar gelagerte Umlenkrolle aufweisen, die sich bei Höhenverstellung der Getränkeauslaufeinheit an dem mit der Zugfeder gespannten Abdeckband dreht, so dass das Abdeckband besonders reibungsarm umgelenkt wird. Es ist aber auch möglich, die Abdeckbandumlenkelemente einfach feststehend mit glatter Oberfläche jedenfalls in dem Flächenbereich auszubilden, über den das Abdeckband gleiten kann.

Ein besonders verschleißarmes und die Abdeckfunktion erfüllendes Abdeckband ist nach Anspruch 11 ein glasfaserverstärktes und Tefloh^{®}-beschichtetes Gewebeband.

In der zweiten Variante der erfindungsgemäßen Getränkebereitungsmaschine sind zwei flexible Abdeckbänder an dem in dem Maschinengehäuse verschiebbar gelagerten Schlitten angebracht, der über das oben erwähnte Verbindungsglied mit der höhenverstellbaren Getränkeauslaufeinheit verbunden ist, so dass eine ungehinderte Zuführung der Getränkezulaufleitung durch den Durchbruch zu der Getränkeauslaufeinheit infolge der getrennten, zueinander beabstandeten Anbringung der Endabschnitte der Abdeckbänder gewährleistet ist. An den jeweils anderen Enden der Abdeckbänder sind Umlenkabschnitte durch ortsfeste Abdeckbandumlenkelemente gebildet, so dass die Abdeckbänder von der Innenseite der Maschinengehäusefrontwand aus weiter nach innen in das Maschinengehäuse umgelenkt sind und nicht oben oder unten an dem Maschinengehäuse anstoßen können Hierzu weist die zweite Variante der Getränkezubereitungsmaschine nach Anspruch 12 die Merkmale auf, dass ein Endabschnitt eines oberen Abdeckbands an einer Oberseite des Schlittens fixiert ist, dass sich das obere Abdeckband mit einem oberen Abdeckabschnitt an der Innenseite der Maschinengehäusefrontwand nach oben zu einem oberen ortsfesten Abdeckbandumlenkelement erstreckt, welches einen Umlenkabschnitt des oberen Abdeckbands von der Innenseite der Maschinengehäusefrontwand weg umlenkt, dass ein Endabschnitt eines unteren Abdeckbands an einer Unterseite des Schlittens fixiert ist, dass sich das untere Abdeckband mit einem unteren Abdeckabschnitt an der Innenseite der Maschinengehäusefrontwand nach unten zu einem unteren ortsfesten Abdeckbandumlenkelement erstreckt, welches einen Umlenkabschnitt des unteren Abdeckbands von der Innenseite der Maschinengehäusefrontwand weg umlenkt, und dass zwischen den an dem Schlitten fixierten Endabschnitten der beiden Abdeckbänder ein Abschnitt des Durchbruchs nicht in dem Maschinengehäuse durch die Abdeckbänder abgedeckt ist, der außen durch die Getränkeauslaufeinheit abgedeckt ist und durch den sich die Getränkezuleitung erstreckt, wobei die Abdeckbänder flexible Bänder sind.

In dem Fall nach Anspruch 13 ist der Schlitten wiederum auf einer vertikalen Gleitschiene verschiebbar geführt, und die Gleitschiene mit dem Schlitten und gegebenenfalls eine Getränkezulaufeinrichtung zu der Getränkezulaufleitung sind in einem Trägerchassis angeordnet, wobei an dem Trägerchassis auch die Abdeckbandumlenkelemente angeordnet sind. Das Trägerchassis ist wiederum als Einheit in dem Maschinengehäuse vorzugsweise an der Maschinengehäusefrontwand angebracht. Die mit dieser Trägerchassiseinheit erreichten Vorteile sind grundsätzlich die gleichen wie oben zu der ersten Variante beschrieben.

In beiden Varianten der erfindungsgemäßen Getränkebereitungsmaschine können gemäß Anspruch 14 die Abdeckbandumlenkelemente einfach als feststehende Gleitumlenkführungen ausgebildet sein. In jeweils einer dieser Gleitumlenkführungen ist eines der Abdeckbänder im Wesentlichen rechtwinklig von der Innenseite der Maschinenfrontwand in das Innere des Maschinengehäuses weggeführt. In der zweiten Variante sind die flexiblen Abdeckbänder steif genug, um bei einer Höhenverstellung der Getränkeauslaufeinheit, bei der jeweils eines der beiden Abdeckbänder in die ihm zugeordnete Gleitumlenkführung geschoben wird, nicht außerhalb der Gleitumlenkführung umknicken.

Hierzu sind die flexiblen Abdeckbänder bevorzugt Metallbänder der Art, wie sie von sich selbst aufrollenden Maßbändern bekannt sind.

Die beiden Varianten der Erfindung werden nachfolgend anhand einer Zeichnung mit vier Figuren beschrieben, woraus sich weitere vorteilhafte Einzelheiten ergeben können. Es zeigen:
- Fig. 1: Eine Espressomaschine mit einer Getränkeauslaufeinheit, nämlich Kaffeeauslaufeinheit, und einem Durchbruch in der Maschinengehäusefrontwand, der bei beiden Varianten der Erfindung in dem Maschinengehäuse abschnittsweise abge- deckt ist,
- Fig. 2: als erste Variante der Erfindung schaubildlich und teilweise auseinandergenommen ein Trägerchassis, welches in einem Maschinengehäuse montierbar ist, mit einer von dem Trä- gerchassis abgesetzten Getränkeauslaufeinheit,
- Fig. 3: einen Teilseitenschnitt der Espressomaschine mit der Ge- tränkeauslaufeinheit gemäß Figur 1 mit dem teilweise ge- schnittenen Trägerchassis gemäß Fig. 2 ohne eine in Fig. 2 abgesetzt dargestellte Getränkezulaufeinrichtung und
- Fig. 4: einen Teilseitenschnitt der Espressomaschine mit Getränke- auslaufeinheit nach Fig. 1 sowie als zweite Variante der Er- findung ein Trägerchassis in einer Seitenansicht.

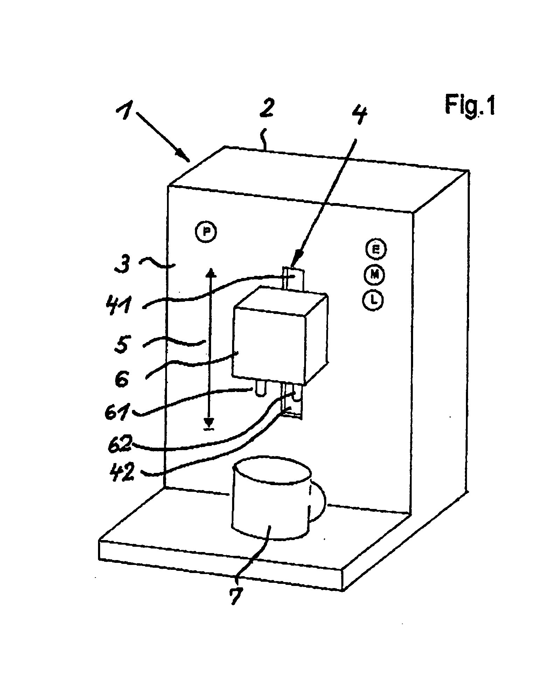

In Fig. 1 ist eine Espressomaschine 1 mit einem Maschinengehäuse 2 und einer Maschinengehäusefrontwand 3 dargestellt, aus der ein Durchbruch 4 ausgespart ist.

Der Durchbruch 4 erstreckt sich in Höhenverstellrichtung 5 einer Getränkeauslaufeinheit 6, hier einer Kaffeeauslaufeinheit, die über der Position eines Auffanggefäßes 7 höhenverstellbar ist. Die Getränkeauslaufeinheft 6 umfasst zwei Getränkeausläufe 61, 62, nämlich Kaffeeausläufe, die unten aus der Getränkeauslaufeinheit 6 herausragen.

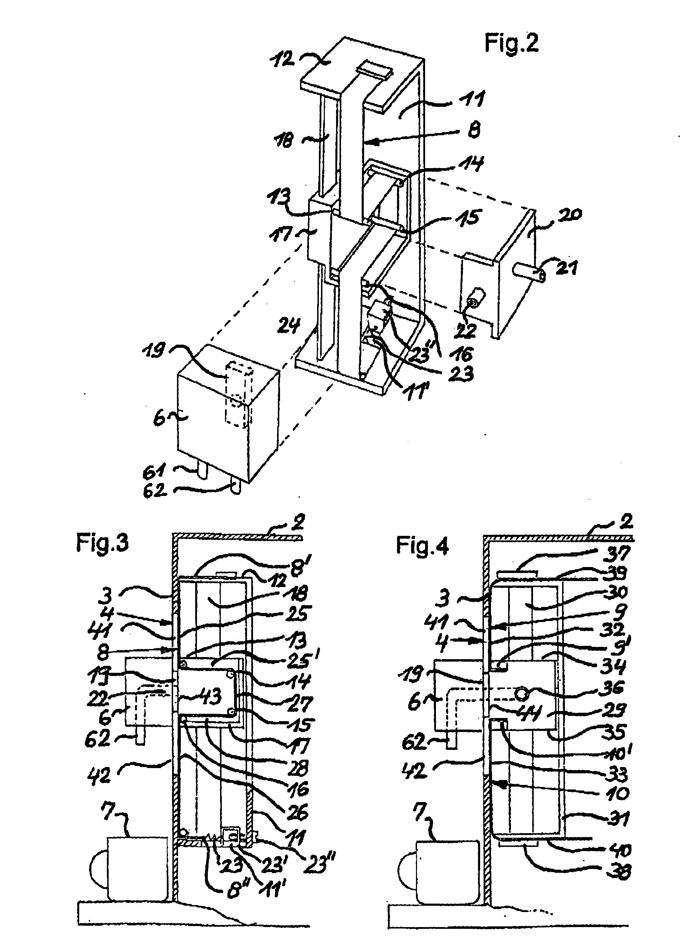

Abschnitte 41, 42 des Durchbruchs 4, die außen von der Getränkeauslaufeinheit 6 nicht abgedeckt sind, werden auf der Innenseite der Maschinengehäusefrontwand 3 von wenigstens einem Abdeckband abgedeckt. In der ersten Variante gemäß Fig. 2 und 3 deckt ein einziges Abdeckband 8 die Abschnitte 41, 42 innen ab. In der zweiten Variante gemäß Fig. 4 sind diese von einem oberen flexiblen Abdeckband 9 und einem unteren flexiblen Abdeckband 10 abgedeckt.

In der ersten Variante der Erfindung ist das Abdeckband 8 an bzw. in einem Trägerchassis 11 gehalten, welches annähernd C-förmig geformt ist und mit seiner im Bereich des Abdeckbands 8 offenen Seite dem Durchbruch 4 in der Maschinengehäusefrontwand 3 zugewandt in dem Maschinengehäuse 2 angeordnet ist.

Das leicht umlenkbare Abdeckband 8, nämlich dessen oberer Abschnitt 8', ist an einem Oberteil 12 des Trägerchassis 11 fixiert und mittels Umlenkrollen 13 - 16 an einem Schlitten 17 geführt, der auf einer vertikalen Gleitschiene 18 in dem Trägerchassis 11 zusammen mit der Getränkeauslaufeinheit 6 höhenverstellbar verschiebbar ist. Der Schlitten 17 steht hierzu über ein Verbindungsglied 19 mit der Getränkeauslaufeinheit 6 in fester Verbindung. Die feste Verbindung kann über einen Abschnitt 22 der Getränkezulaufleitung erfolgen. Der Abschnitt 22 und ein anschließender rechtwinklig zu diesem orientierter Abschnitt 21 der Getränkezulaufleitung sind in der Getränkezulaufeinrichtung 20 gehalten, die als ein Winkelstück ausgebildet ist. Die Gehäusezulaufeinrichtung 20 ist fest an dem Schlitten 17 anbringbar und kann in dieser Weise einen Bestandteil des Schlittens 17 bilden.

Unterhalb des unteren Umlenkabschnitts 28 des Abdeckbands 8 ist dieses über eine Feder 23, insbesondere eine Zugfeder, an einem Unterteil 24 des Trägerchassis 11 angebracht, wobei das Abdeckband 8 durch die Feder 23 gespannt ist.

In der oben beschriebenen Anordnung der ersten Variante der Efindung ist das Abdeckband 8 mit dem Trägerchassis 11 dicht an der Innenseite der Maschinengehäusefrontwand 3 angeordnet, so dass es mit jeweils einem oberen Abdeckbandabschnitt 25 und einem unteren Abdeckbandabschnitt 26 oberhalb bzw. unterhalb der Umlenkrollen 13-16 den Durchbruch 4 innen dort abdeckt, wo die Abschnitte 41, 42 des Durchbruchs 4 außen nicht durch die Getränkeauslaufeinheit 6 abgedeckt sind. Zwischen den Umlenkrollen 13 und 14 wird das Abdeckband 8 unterhalb des oberen Abdeckbandabschnitts 25 zu einem oberen Umlenkabschnitt 25' von der Innenseite der Maschinengehäusefrontwand 3 weg umgelenkt. In gleichbleibendem Abstand zu der Innenseite der Maschinengehäusefrontwand 3 wird das Abdeckband 8 in einem anschließenden Zwischenabschnitt 27 gehalten, der sich nach unten bis zu der Umlenkrolle 15 erstreckt. Daran anschließend wird das Abdeckband 8 zwischen den Umlenkrollen 15 und 16 wieder zu der Innenseite der Maschinengehäusefrontwand 3 hin umgelenkt, um den Abschnitt 42 des Durchbruchs 4 mit dem unteren Abdeckbandabschnitt 26 abzudecken. An den unteren Abdeckbandabschnitt 26 anschließend bildet das Abdeckband 8 den unteren Endabschnitt 8", indem es an dem Unterteil 24 des Trägerchassis umgelenkt ist.

Damit begrenzt das Abdeckband 8 in dem Umlenkbereich zwischen den Umlenkrollen 13 - 16 einen annähernd C-förmigen, zu dem Durchbruch 4 offenen Raum, durch den die Getränkezulaufleitung 22 geführt ist, welche die getränkeleitende Verbindung zwischen einer nicht dargestellten Brüheinheit und dem Verbindungsglied 19 bzw. der Getränkeauslaufeinheit 6 bildet.

Damit das Abdeckband 8 stets die oben beschriebene Form annimmt, ist es durch eine Feder 23 gespannt, die einerseits mit dem unteren Endabschnitt 8" des Abdeckbands 8 und andererseits über eine Verstelleinheit 23', 23" mit dem Trägerchassis 11 in Verbindung steht. Die Feder 23 ist speziell eine Zugfeder, die einerseits an dem Endabschnitt 8" und andererseits an der Verstelleinheit 23'. 23" angebracht ist.

Mit der Verstelleinheit 23', 23" kann die Federvorspannung und damit die Zugspannung des Abdeckbands 8 frei wählbar eingestellt werden. Die Verstelleinheit 23', 23" umfasst im Einzelnen eine Stellschraube 23', die in dem Trägerchassis 11 nur drehbar axial abgestützt gelagert ist und mit einem Gewindeabschnitt in ein Gewinde eines Verbindungselements 23" eingreift, das in einem Schlitz 11' des Trägerchassis 11 verschiebbar geführt ist und mit dem Endabschnitt 8" des Abdeckbands 8 verbunden ist.

Statt der voranstehend beschriebenen Anbringung des Abdeckbands 8 in dem Chassis 11 ist es auch möglich, umgekehrt den oberen Endabschnitt 8' des Abdeckbands 8 mittels der Feder 23 und der Stelleinheit 23', 23" einstellbar spannbar auf dem Oberteil 12 des Trägerchassis anzubringen und den unteren Endabschnitt 8" unten an dem Trägerchassis 11 zu befestigen.

In beiden Fällen kann die Vorspannung der Feder 23 durch Drehen der Stellschraube 23' der Verstelleinheit 23', 23" so eingestellt werden, dass sich die Feder 23 nicht verwindet, weil die Drehung der Stellschraube 23' wegen des in dem Schlitz 11' des Chassis 11 geführten Verbindungselements 23" nicht auf die Feder 23 übertragen wird, sondern nur eine Längsverschiebung des mit dem Verbindungselement 23" verbundenen Federendes Infolge des in das Gewinde des Verbindungselements 23" eingreifenden Gewindeabschnitts der Stellschraube 23' auftritt.

Das umlenkbare Abdeckband 8 ist bevorzugt ein glasfaserverstärktes und Teflon^{®}-beschichtetes Gewebeband.

Die durch die Umlenkung des Abdeckbands 8 und die an ihm angreifenden Zugkräfte verursachten Reibekräfte an den Umlenkrollen 13 - 16 und an dem auf der vertikalen Gleitschiene 18 geführten Schnitten 17 sind zur Arretierung der eingestellten Höhe der Getränkeauslaufeinheit 6 nutzbar.

In der zweiten Variante der Erfindung gemäß Figur 4 sind das obere flexible Abdeckband 9 und das untere flexible Abdeckband 10 an einem Schlitten 29 angebracht, der ähnlich wie der Schlitten 17 der ersten Variante auf einer vertikalen Gleitschiene 30 zusammen mit der Gehäuseauslaufeinheit 6 höhenverstellbar geführt ist. Die vertikale Gleitschiene 30 und der Schlitten 29 sind, ähnlich wie in der ersten Variante, in einem Trägerchassis 31 angeordnet, welches so in dem Maschinengehäuse 2 angebracht ist, dass sich jeweils ein oberer Abdeckbandabschnitt 32 und ein unterer Abdeckbandabschnitt 33 dicht hinter dem Durchbruch 4 der Maschinengehäusefrontwand 3 befinden.

Unterhalb des oberen Abdeckbandabschnitts 32 ist ein Endabschnitt 9' des oberen flexiblen Abdeckbands 9 an der Oberseite 34 des Schlittens 29 angebracht und oberhalb des unteren Abdeckbandabschnitts 33 ist ein Endabschnitt 10' des unteren flexiblen Abdeckbands 10 an der Unterseite 38 des Schlittens 29 fixiert. Infolgedessen ist ein durch die Getränkeauslaufeinheit 6 außen abgedeckter Abschnitt 44 des Durchbruchs 4 innen nicht durch die Abdeckbänder 9, 10 abgedeckt, durch den eine Getränkezulaufleitung 36 ungehindert aus einem zu dem Durchbruch 4 hin offenen Raum in dem Schlitten 29 in die Getränkeauslaufeinheit 6 verläuft. Aus diesem Raum ist die Getränkezulaufleitung 36 seitlich herausgeführt, wie in Fig. 4 gezeigt Sie kann sich entsprechend der Höheneinstellung der Getränkeauslaufeinheit 6 beweglich weiter in dem Innern des Maschinengehäuses 2 zu einer nicht dargestellten Brüheinheit erstrecken.

Die zur Herabsetzung des vertikalen Einbauraums wesentliche Umlenkung des oberen flexiblen Abdeckbands 9 und des unteren flexiblen Abdeckbands 10 erfolgt jeweils oben auf dem Trägerchassis 31 an einer dort angeordneten Gleitumlenkführung 37 bzw. unten an dem Trägerchassis 31 an einer an deren Unterseite angeordneten Gleitumlenkführung 38. Durch die Gleitumlenkführungen 37, 38 bildet das obere flexible Abdeckband 9 bzw. das untere flexible Abdeckband 10 die Umlenkabschnitte 39, 40.

Die flexiblen Abdeckbänder 9 und 10 sind genügend steif, um jeweils zwischen der Gleitumlenkführung 37 und dem Endabschnitt 9' an den Schlitten 29 bzw. zwischen der Gleitumlenkführung 38 und dem Endabschnitt 10' an dem Schlitten 29 nicht von der Innenseite der Maschinengehäusefrontwand 3 abgebogen bzw. abgeknickt zu werden.

Dafür sind vorteilhaft die flexiblen Abdeckbänder 9 und 10 Metallbänder der Art, wie sie im Prinzip von sich selbst aufrollenden Maßbändem bekannt sind.

### Bezugszahlenliste

- 1: Espressomaschine
- 2: Maschinengehäuse
- 3: Maschinengehäusefrontwand
- 4: Durchbruch
- 5: Höhenverstellrichtung
- 6: Getränkeauslaufeinheit
- 7: Auffanggefäß
- 8: Abdeckband
- 8': oberer Endabschnitt
- 8": unterer Endabschnitt
- 9: oberes Abdeckband
- 9': Endabschnitt des oberen Abdeckbands
- 10: unteres Abdeckband
- 10': Endabschnitt des unteren Abdeckbands
- 11: Trägerchassis
- 11': Schlitz
- 12: Oberteil
- 13: Umlenkrolle
- 14: Umlenkrolle
- 15: Umlenkrolle
- 16: Umlenkrolle
- 17: Schlitten
- 18: vertikale Gleitschiene
- 19: Verbindungsglied
- 20: Getränkezulaufeinrichtung
- 21: Getränkezulaufleitung (Abschnitt)
- 22: Getränkezulaufleitung (Abschnitt)
- 23: Feder
- 23': Stellschraube (Verstelleinheit)
- 23": Verbindungselement (Verstelleinheit)
- 24: Unterteil des Trägerchassis
- 25: oberer Abdeckbandabschnitt
- 25': oberer Umlenkabschnitt
- 26: unterer Abdeckbandabschnitt
- 26': unterer Umlenkabschnitt
- 27: Zwischenabschnitt
- 28: unterer Umlenkabschnitt
- 29: Schlitten
- 30: vertikale Gleitschiene
- 31: Trägerchassis
- 32: oberer Abdeckbandabschnitt
- 33: unterer Abdeckbandabschnitt
- 34: Oberseite des Schlittens 29
- 35: Unterseite des Schlittens 29
- 36: Getränkezulaufleitung (Abschnitt)
- 37: Gleitumlenkführung
- 38: Gleitumlenkführung
- 39: Umlenkabschnitt
- 40: Umlenkabschnitt
- 41: Abschnitt des Durchbruchs
- 42: Abschnitt des Durchbruchs
- 43: Abschnitt des Durchbruchs
- 44: Abschnitt des Durchbruchs
- 61: Getränkeauslauf
- 62: Getränkeauslauf

## Patentansprüche

1. Getränkebereitungsmaschine, insbesondere Espressomaschine, mit einer höhenverstellbaren Getränkeauslaufeinheit (6), die im Wesentlichen auf einer Vorderseite einer Maschinengehäusefrontwand (3) angeordnet ist, wobei die Maschinengehäusefrontwand (3) einen sich in Höhenverstellrichtung (5) erstreckenden Durchbruch (4) aufweist, durch den sich eine Getränkezulaufleitung (22, 36) zwischen der Getränkeauslaufeinheit (6) und dem inneren eines Maschinengehäuses (2) erstreckt,
**dadurch gekennzeichnet,**
**dass** in dem Maschinengehäuse (2) hinter dem Durchbruch (4) wenigstens ein Abdeckband (8, 9, 10) angeordnet ist, welches mit der Getränkeauslaufeinheit (6) insbesondere über ein Verbindungsglied (19) in Verbindung steht,
**dass** das mindestens eine Abdeckband (8, 9, 10) mit mindestens einem abdeckenden Abdeckbandabschnitt (25, 26, 32, 33) jeweils einen von der Getränkeauslaufeinheit (6) außen nicht abgedeckten Abschnitt (41, 42) des Durchbruchs (4) an der Innenseite der Maschinengehäusefrontwand (3) abdeckt und
**dass** jeweils mindestens ein Umlenkabschnitt (25', 28, 39, 40) des mindestens einen Abdeckbands (8, 9, 10) von der Innenseite der Maschinengehäusefrontwand (3) weg umgelenkt ist.

2. Getränkebereitungsmaschine nach Anspruch 1,
**dadurch gekennzeichnet,**
**dass** das Verbindungsglied (19) mit einem in dem Maschinengehäuse (2) vertikal verschiebbar gelagerten Schlitten (17, 29) verbunden ist und dass das mindestens eine Abdeckband (8, 9, 10) mit dem Schlitten (17, 29) in Verbindung steht.

3. Getränkebereitungsmaschine nach Anspruch 1 oder 2,
**dadurch gekennzeichnet,**
**dass** ein einziges Abdeckband (8) je einen von der Getränkeauslaufeinheit (6) oberhalb und unterhalb der Getränkeauslaufeinheit (6) außen nicht abgedeckten Abschnitt (41, 42) des Durchbruchs (4) der Maschinengehäusefrontwand (3) an deren Innenseite abdeckt.

4. Getränkebereitungsmaschine nach Anspruch 3,
**dadurch gekennzeichnet,**
**dass** ein oberer Endabschnitt (8') oder ein unterer Endabschnitt (8") des Abdeckbands (8) oberhalb bzw. unterhalb des Durchbruchs (4) der Maschinengehäusefrontwand (3) in Bezug auf diese ortsfest fixiert ist, dass mit dem jeweils anderen der beiden Endabschnitte (8', 8") des Abdeckbands (8) eine das Abdeckband (8) spannende Feder (23) in Verbindung steht,
**dass** Abdeckbandumlenkelemente (13 - 16) an dem Schlitten (17) so angeordnet sind, dass zumindest zwei Umlenkabschnitte (25', 28) des Abdeckbands, die mittelbar oder unmittelbar aneinander grenzen, einen Abschnitt (43) des Durchbruchs (4), der außen durch die Getränkeauslaufeinheit abgedeckt ist, innen in dem Maschinengehäuse (2) nicht abdecken und
**dass** sich in den innen nicht abgedeckten Abschnitt des Durchbruchs (4) die Getränkezulaufleitung (22) erstreckt.

5. Getränkebereitungsmaschine nach Anspruch 4,
**dadurch gekennzeichnet,**
**dass** die das Abdeckband (8) spannende Feder (23) mittels einer mit ihr gekoppelten Verstelleinheit (23', 23") einstellbar ist.

6. Getränkebereitungsmaschine nach Anspruch 4 oder 5,
**dadurch gekennzeichnet,**
**dass** die mit dem Schlitten (17) in Verbindung stehenden Abdeckbandumlenkelemente (13 - 16) so angeordnet sind, dass zwischen den beiden Umlenkabschnitten (25', 28) ein Zwischenabschnitt (27) in horizontalem Abstand zu dem Durchbruch (4) der Maschinengehäusefrontwand (3) umgelenkt ist.

7. Getränkebereitungsmaschine nach einem der Ansprüche 4 - 6.
**dadurch gekennzeichnet,**
**dass** der Schlitten (17) auf einer vertikalen Gleitschiene (18) verschiebbar geführt ist,
**dass** die Gleitschiene (18) mit dem Schlitten (17) und gegebenenfalls eine Getränkezulaufeinrichtung (20) mit mindestens einem Abschnitt (21, 22) der Getränkezulaufleitung auf einem Trägerchassis (11) angeordnet sind, welches in dem Maschinengehäuse (2), vorzugsweise an der Maschinengehäusefrontwand (3), innen montiert ist und
**dass** jeweils einer der Endabschnitte (8', 8") des Abdeckbands (8) und die Feder (23) an dem Trägerchassis (11) angebracht sind.

8. Getränkebereitungsmaschine nach einem der Ansprüche 4 - 7,
**dadurch gekennzeichnet,**
**dass** die Umlenkabschnitte (25', 28) und gegebenenfalls der Zwischenabschnitt (27) des Abdeckbands (8) einen an dem Durchbruch (4) nicht von dem Abdeckband (8) begrenzten Raumabschnitt annähernd C-förmig begrenzen.

9. Getränkebereitungsmaschine nach einem der Ansprüche 4 - 8,
**gekennzeichnet durch**
vier Abdeckbandumlenkelemente (13, 14, 15, 16) in einer annähernd rechteckförmigen Anordnung, wobei an jeder Ecke der Anordnung eines der Abdeckbandumlenkelemente (13, 14, 15, 16) angeordnet ist.

10. Getränkebereitungsmaschine nach einem der Ansprüche 4 - 9,
**gekennzeichnet durch**
jeweils eine drehbar gelagerte Umlenkrolle (13, 14, 15, 16) als eines der Abdeckbandumlenkelemente.

11. Getränkebereitungsmaschine nach einem der Ansprüche 4 -10, **dadurch gekennzeichnet,**
**dass** das Abdeckband (8) ein glasfaserverstärktes und Tefton^{®}-beschichtetes Gewebeband ist.

12. Getränkebereitungsmaschine nach Anspruch 2,
**dadurch gekennzeichnet,**
**dass** ein Endabschnitt (9') eines oberen Abdeckbands (9) an einer Oberseite (34) des Schlittens (29) fixiert ist,
**dass** sich das obere Abdeckband (9) mit einem oberen Abdeckabschnitt (32) an der Innenseite der Maschinengehäusefrontwand (3) nach oben zu einem oberen ortsfesten Abdeckbandumlenkelement (37) erstreckt, welches einen Umlenkabschnitt (39) des oberen Abdeckbands (9) von der Innenseite der Maschinengehäusefrontwand (3) weg umlenkt, dass ein Endabschnitt (10') eines unteren Abdeckbands (10) an einer Unterseite (35) des Schlittens (29) fixiert ist,
**dass** das untere Abdeckband (10) mit einem unteren Abdeckabschnitt (33) an der innenseite der Maschinengehäusefrontwand (3) nach unten zu einem unteren ortsfesten Abdeckbandumlenkelement (38) erstreckt, welches einen Umlenkabschnitt (40) des unteren Abdeckbands (10) von der Innenseite der Maschinengehäusefrontwand (3) weg umlenkt,
**dass** zwischen den an dem Schlitten (29) fixierten Endabschnitten (9', 10') der beiden Abdeckbänder (9, 10) ein Abschnitt des Durchbruchs (4) nicht in dem Maschinengehäuse (2) durch die Abdeckbänder (9, 10) abgedeckt ist, der außen durch die Getränkeauslaufeinheit (6) abgedeckt ist und durch den sich die Getränkezuleitung (36) erstreckt und
**dass** die Abdeckbänder (9, 10) flexible Bänder sind.

13. Getränkebereitungsmaschine nach Anspruch 12,
**dadurch gekennzeichnet,**
**dass** der Schlitten (29) auf einer vertikalen Gleitschiene (30) verschiebbar geführt ist,
**dass** die Gleitschiene (30) mit dem Schlitten (29) und gegebenenfalls ein Abschnitt einer Getränkezulaufleitung (36) in einem Trägerchassis (31) angeordnet sind,
**dass** die Abdeckbandumlenkelemente (37, 38) an dem Trägerchassis (31) angeordnet sind und
**dass** das Trägerchassis (31) in dem Maschinengehäuse (2) vorzugsweise an der Maschinengehäusefrontwand (3) angebracht ist.

14. Getränkebereitungsmaschine nach einem der Ansprüche 4 - 9, 12 oder 13,
**dadurch gekennzeichnet,**
**dass** jedes der Abdeckbandumlenkelemente jeweils als eine feststehende Gleitumlenkführung (37, 38) ausgebildet ist, in der das Abdeckband (8, 9, 10) im Wesentlichen rechtwinklig von der innenseite der Maschinengehäusefrontwand (3) weg geführt ist.

15. Getränkebereitungsmaschine nach einem der Ansprüche 12 -14,
**dadurch gekennzeichnet,**
**dass** die flexiblen Abdeckbänder (9, 10) Metallbänder sind.

## Claims

1. Beverage making machine, in particular espresso machine, with a height-adjustable drink outlet unit (6) provided substantially on a front side of a machine housing front wall, wherein the machine housing front wall (3) includes an opening (4) extending in direction (5) of adjustable height through which opening (4) a beverage feed line (22, 36) extends between the drink outlet unit (6) and the interior of the machine housing (2),
**characterized in**
**that** in the machine housing (2), behind the opening (4), at least one masking tape (8, 9, 10) is arranged which is connected with the drink outlet unit (6) particularly via a connecting member (19),
**that** the at least one masking tape (8, 9, 10) masks on the inside of the machine housing front wall (3), by at least one covering masking tape section (25, 26, 32, 33), one section (41, 42) each of the opening (4) not masked on the outside by the drink outlet unit (6), and
**that** at least one deflecting section (25', 28, 29, 40) each of the at least one masking tape (8, 9, 10) is deflected away from the inner side of the machine housing front wall (3).

2. Beverage making machine according to claim 1,
**characterized in**
**that** the connecting member (19) is connected with a sleigh (17, 29) vertically movably supported in the machine housing (2) and that the at least one masking tape (8, 9, 10) is connected with the sleigh (17,29).

3. Beverage making machine according to claim 1 or 2,
**characterized in**
**that** one single masking tape (8) masks one section (41, 42) each of the opening (4) of the machine housing front wall (3) at the inside thereof not masked on the outside by the drink outlet unit (6) above and below the drink outlet unit (6).

4. Beverage making machine according to claim 3,
**characterized in**
**that** either an upper end section (8') or a lower end section (8") of the masking tape (8) is permanently fixed above, or below, the opening (4) of the machine housing front wall (4) in relation thereto, that a spring (23) tensioning the masking tape (8) is connected with the other of the two end sections (8', 8") each of the masking tape (8),
**that** masking tape deflecting elements (13 -16) are provided on the sleigh (17) so that at least two deflecting sections (25', 28) of the masking tape which, directly or indirectly, adjoin each other will not, in the interior of the machine housing (2) mask a section (43) of the opening (4) which is masked on the outside by the drink outlet unit, and
**that** the drink feed line (22) extends into the section of the opening (4) not masked in the interior.

5. Beverage making machine according to claim 4,
**characterized in**
**that** the spring (23) tensioning the masking tape (8) is adjustable by means of an adjusting unit (23', 23") couplet to it.

6. Beverage making machine according to claim 4 or 5,
**characterized in**
**that** the masking tape deflecting elements (13-16) are so disposed that between the two deflecting sections (25', 28) an intermediate section (27) is deflected horizontally spaced relative to the opening (4) of the machine housing front wall (3).

7. Beverage making machine according to one of claims 4 to 6,
**characterized in**
**that** the sleigh (17) is movably guided on a vertical slide bar (18), that the slide bare (18) with the sleigh (17) and, if applicable, a drink feed device (20) with at least one section (21, 22) of the drink feed line are arranged on a carrier chassis (11) which is mounted in the machine housing (2), preferably on the inner side of the machine housing front wall (3), and
**that** one of the end sections (8', 8") each of the masking tape (8) and the spring (23) are provided on the carrier chassis (11).

8. Beverage making machine according to one of claims 4 to 7,
**characterized in**
**that** the deflecting sections (25', 28) and, if applicable, the intermediate section (27) of the masking tape (8) define a space section in an approximate C shape at the opening (4) not defined by the masking tape (8).

9. Beverage making machine according to one of claims 4 to 8,
**characterized by**
four masking tape deflecting elements (13, 14, 15, 16) in an approximately rectangular arrangement, wherein at each corner of the
arrangement one of the masking tape deflecting elements (13, 14, 15,16) is provided.

10. Beverage making machine according to one of claims 4 to 9,
**characterized by**
one pivoted deflecting roller (13, 14, 15, 16) each as one of the masking tape deflecting elements.

11. Beverage making machine according to one of claims 4 to 10,
**characterized in**
**that** the masking tape (8) is a glass fibre reinforced and Teflon™-covered textile tape.

12. Beverage making machine according to claim 2,
**characterized in**
**that** one end section (9') of an upper masking tape (9) is fixed to an upper side (34) of the sleigh (29),
**that** the upper masking tape (9) extends with an upper masking section (32) at the inner side of the machine housing front wall (3) upwards to an upper permanently fixed masking tape deflecting element (37) which deflects a deflecting section (39) of the upper masking tape (9) away from the inner side of the machine housing front wall (3),
**that** an end section (10') of a lower masking tape (10) is fixed to an underside (35) of the sleigh (29),
**that** the lower masking tape (10) extends with a lower masking section (33) on the inner side of the machine housing front wall (3) downwards to a lower permanently fixed masking tape deflecting element (38) which deflects a deflecting section (40) of the lower masking tape (10) away from the inner side of the machine housing front wall (3),
**that** between the end sections (9', 10') of the two masking tapes (9, 10) fixed to the sleigh (29) one section of the opening (4) is not masked in the machine housing (2) by the masking tapes (9, 10) which is masked, outside, by the drink outlet unit (6) and through which the drink feeding line (36) extends, and
**that** the masking tapes (9, 10) are flexible tapes.

13. Beverage making machine according to claim 12,
**characterized in**
**that** the sleigh (29) is movably guided on a vertical slide bar (30), that the slide bar (30) with the sleigh (29) and, if applicable, a section of a drink feed line (36) are arranged in a carrier chassis (31), that the masking tape deflecting elements (37, 38) are arranged on the carrier chassis (31), and
**that** the carrier chassis (31) is provided in the machine housing (2) preferably on the machine housing front wall (3).

14. Beverage making machine according to one of claims 4 to 9, 12 or 13,
**characterized in**
**that** each of the masking tape deflecting elements is formed as a fixed slide deflecting guide (37, 38) each in which the masking tape (8, 9, 10) is guided away, at a substantially right angle, from the inner side of the machine housing front wall (3).

15. Beverage making machine according to one of claims 12 to 14,
**characterized in**
**that** the flexible masking tapes (9, 10) are metal tapes.

## Revendications

1. Machine de préparation de boissons, en particulier machine expresso, dotée d'une unité de distribution de boissons (6) réglable en hauteur, qui est disposée sensiblement sur une face avant d'une paroi frontale (3) du bâti de la machine, la paroi frontale (3) du bâti de la machine comportant une ouverture (4) s'étendant dans une direction de réglage verticale (5), à travers laquelle s'étend, entre l'unité de distribution de buissons (6) et l'intérieur d'un bâti de machine (2), un conduit d'alimentation de boissons (22, 36),
**caractérisée en ce qu'**est disposée, dans le bâti de machine (2) derrière l'ouverture (4), au moins une bande de recouvrement (8, 9, 10) qui est reliée à l'unité de distribution de boissons (6) en particulier via un organe de liaison (19),
**en ce qu'**au moins une partie (25, 26, 32, 33) de ladite au moins une bande de recouvrement (8, 9, 10) recouvre respectivement une partie (41, 42) de l'ouverture (4), non recouverte à l'extérieur par l'unité de distribution de boissons (6), sur la face interne de la paroi frontale (3) du bâti de la machine, et
**en ce que** respectivement au moins une portion de renvoi (25', 28, 39, 40) de ladite au moins une bande de recouvrement (8, 9, 10) est défléchie à l'écart de la face interne de la paroi frontale (3) du bâti de la machine.

2. Machine de préparation de boissons selon la revendication 1,
**caractérisée en ce que**
l'organe de liaison (19) est raccordé à un chariot (17, 29) monté à coulissement vertical dans le bâti de la machine (2) et **en ce que** ladite au moins une bande de recouvrement (8, 9, 10) est reliée au chariot (17, 29).

3. Machine de préparation de boissons selon la revendication 1 ou 2,
**caractérisée en ce qu'**une bande de recouvrement (8) unique recouvre respectivement une partie (41, 42) de l'ouverture (4) de la paroi frontale (3) du bâti de la machine sur sa face interne, qui n'est pas recouverte à l'extérieur par l'unité de distribution de boissons (6) au-dessus et au-dessous de l'unité de distribution de boissons (6).

4. Machine de préparation de boissons selon la revendication 3,
**caractérisée en ce qu'**une partie d'extrémité supérieure (8') ou une partie d'extrémité inférieure (8") de la bande de recouvrement (8) au-dessus ou au-dessous de l'ouverture (4) de la paroi frontale (3) du bâti de la machine est montée de manière fixe par rapport à celle-ci,
**en ce qu'**un ressort (23) de tension de la bande de recouvrement (8) est respectivement en liaison avec l'autre des deux parties d'extrémité (8', 8") de la bande de recouvrement (8),
**en ce que** des éléments de renvoi (13 16) de la bande de recouvrement sont disposés sur le chariot (17) de façon qu'au moins deux portions de renvoi (25', 28) de la bande de recouvrement, qui sont directement ou indirectement adjacentes, ne recouvrent pas, à l'intérieur du bâti de machine (2), une partie (43) de l'ouverture (4) qui est recouverte à l'extérieur par l'unité de distribution de boissons, et
**en ce que** l'unité d'alimentation de boissons (22) s'étend dans la partie non recouverte à l'intérieur de l'ouverture (4)

5. Machine de préparation de boissons selon la revendication 4,
**caractérisée en ce que**
le ressort (23) de tension de la bande de recouvrement (8) est réglable au moyen d'une unité de réglage (23', 23") couplée à celui-ci.

6. Machine de préparation de boissons selon la revendication 4 ou 5,
**caractérisée en ce que**
les éléments de renvoi (13 - 16) de la bande de recouvrement reliés au chariot (17) sont disposés de façon telle qu'entre les deux sections de renvoi (25', 28) est défléchie une portion intermédiaire (27) espacée horizontalement de l'ouverture (4) de la paroi frontale (3) du bâti de la machine.

7. Machine de préparation de boissons selon l'une des revendications 4 à 6,
**caractérisée en ce que**
le chariot (17) est guidé à coulissement sur une glissière (18) verticale,
**en ce que** la glissière (18) avec le chariot (17), et éventuellement un dispositif d'alimentation de boissons (20) avec au moins une partie (21, 22) du conduit d'alimentation de boissons, sont disposés sur un châssis support (11) monté à l'intérieur du bâti (2) de la machine, de préférence sur la paroi frontale (3) du bâti de la machine, et
**en ce que** respectivement l'une des parties d'extrémité (8, 8") de la bande de recouvrement (8) et le ressort (23) sont disposés sur le châssis support (11).

8. Machine de préparation de boissons selon l'une des revendications 4 à 7,
**caractérisée en ce que**
les portions de renvoi (25', 28) et, éventuellement, la portion intermédiaire (27) de la bande de recouvrement (8) délimitent, sensiblement à la manière d'un « C », une portion d'espace qui n'est pas délimitée au niveau de l'ouverture (4) par la bande de recouvrement (8).

9. Machine de préparation de boissons selon l'une des revendications 4 à 8,
**caractérisée par**
quatre éléments de renvoi de bande de recouvrement (13, 14, 15, 16) dans un agencement sensiblement rectangulaire, l'un des éléments de renvoi de bande de recouvrement (13, 14, 15, 16) étant disposé à chaque angle de l'agencement.

10. Machine de préparation de boissons selon l'une des revendications 4 à 9,
**caractérisée par**
respectivement un rouleau déflecteur (13, 14, 15, 16) monté à rotation en tant que l'un des éléments de renvoi de la bande de recouvrement.

11. Machine de préparation de boissons selon l'une des revendications 4 à 10,
**caractérisée en ce que** la bande de recouvrement (8) est une bande de tissu renforcée de fibre de verre et revêtue de Téflon®.

12. Machine de préparation de boissons selon la revendication 2,
**caractérisée en ce que**
une partie d'extrémité (9') d'une bande de recouvrement supérieure (9) est fixée sur une face supérieure (34) du chariot (29),
**en ce qu'**une partie de recouvrement supérieure (32) de la bande de recouvrement supérieure (9) s'étend sur la face interne de la paroi frontale (3) du bâti de la machine vers le haut jusqu'à un élément de renvoi de bande de recouvrement (37) supérieur fixe, qui défléchit une portion de renvoi (39) de la bande de recouvrement supérieure (9) à l'écart de la face interne de la paroi frontale (3) du bâti de la machine,
**en ce qu'**une partie d'extrémité (10') d'une bande de recouvrement inférieure (10) est fixée sur une face inférieure (35) du chariot (29),
**en ce qu'**une partie de recouvrement inférieure (33) de la bande de recouvrement inférieure (10) s'étend sur la face interne de la paroi frontale (3) du bâti de la machine vers le bas jusqu'à un élément de renvoi de bande de recouvrement (38) inférieur fixe, qui défléchit une portion de renvoi (40) de la bande de recouvrement inférieure (10) à l'écart de la face interne de la paroi frontale (3) du bâti de la machine,
**en ce qu'**entre les parties d'extrémité (9', 10'), fixées sur le chariot (29), des deux bandes de recouvrement (9, 10), n'est pas recouverte dans le bâti de machine (2) par les bandes de recouvrement (9, 10) une partie de l'ouverture (4) qui est recouverte à l'extérieur par l'unité de distribution de boissons (6) et à travers laquelle s'étend le conduit d'alimentation de boissons (36), et
**en ce que** les bandes de recouvrement (9, 10) sont des bandes flexibles,

13. Machine de préparation de boissons selon la revendication 12,
**caractérisée en ce que**
le chariot (29) est guidé coulissement sur une glissière (30) verticale,
**en ce que** la glissière (30) avec le chariot (29) et, éventuellement, une partie d'un conduit d'alimentation de boissons (36), sont disposées dans un châssis support (31),
**en ce que** les éléments de renvoi de bande de recouvrement (37, 38) sont disposés sur le châssis support (31), et
**en ce que** le châssis support (31) est disposé dans le bâti de machine (2), de préférence sur la paroi frontale (3) du bâti de la machine.

14. Machine de préparation de boissons selon l'une des revendications 4 à 9, 12 ou 13,
**caractérisée en ce que**
chacun des éléments de renvoi de bande de recouvrement est conçu respectivement en tant que glissière de renvoi (37, 38) fixe, dans laquelle la bande de recouvrement (8, 9, 10) est guidée de manière sensiblement perpendiculaire à l'écart de la face interne de la paroi frontale (3) du bâti de la machine.

15. Machine de préparation de boissons selon l'une des revendications 12 - 14,
**caractérisée en ce que**
les bandes de recouvrement flexibles (9, 10) sont des bandes métalliques.
